# EUROPÄISCHE PATENTSCHRIFT

(11) **EP 0 389 958 B1**
(45) Veröffentlichungstag und Bekanntmachung des Hinweises auf die Patenterteilung: **01.06.1994**
(21) Anmeldenummer: 90105391.8
(22) Anmeldetag: 22.03.1990
(51) Int. Cl.: C02F 3/30, C02F 3/06, C02F 3/10

(54) **Verfahren zur biochemischen Aufbereitung von Wasser**
Process for biochemical treatment of water
Procédé pour le traitement biochimique d'eau

(30) Priorität: 25.03.1989 DE 3909980
(43) Veröffentlichungstag der Anmeldung: 03.10.1990
(73) Patentinhaber: PREUSSAG AKTIENGESELLSCHAFT, 30625 Hannover (DE)
(72) Erfinder: Klyne, Ulrich, Dipl.-Ing., D-4300 Essen 15 (DE); Krautwurst, Joachim, D-4300 Essen (DE); Loag, Jürgen, D-3257 Springe 1 (DE); Stöver, Thomas, Dipl.-Ing., D-3000 Hannover 91 (DE)

(56) Entgegenhaltungen:
- EP-A- 0 208 253
- DE-A- 2 549 415
- FR-A- 2 446 259
- PATENT ABSTRACTS OF JAPAN, vol. 14, no. 74 (C-687)[4017], 13. Februar 1990; & JP-A-63 120 494 (TOSHIBA CORP.) 27.11.89

## Beschreibung

Die Erfindung betrifft ein Verfahren zur biochemischen Aufbereitung von Wasser, insbesondere zur Denitrifikation von nitrathaltigem Wasser, bei dem das Rohwasser über ein Bett aus einem schwimmfähigen, körnigen Trägermaterial geleitet wird, das den Mikroorganismen als Träger bzw. Bewuchsfläche dient, und bei dem in Abständen ein Spülvorgang zum Entfernen von Biomasse aus dem Festbett durchgeführt wird.

Bei einem aus der DE-C- 25 49 415 bekannten Verfahren zur Denitrifikation von nitrathaltigem Wasser werden als Trägermaterial für die Mikroorganismen Kugeln aus Schaumpolystyrol verwendet, die in einem Reaktor ein schwimmendes Festbett mit ausreichend großen Zwischenräumen für das hindurchströmende Wasser bilden. Da bei der biologischen Abbautätigkeit sich ständig Mikroorganismen neu bilden, füllen sich die Zwischenräume zunehmend mit Biomasse, bis schließlich der Wasserdurchfluß behindert wird. Um die Biomasse zu entfernen, wird in Abständen ein Spülvorgang durchgeführt, bei dem aus einem über dem Reaktor angeordneten Reservoir ein kurzer, schneller Spülstoß auf das Festbett einwirkt, der die Kunststoffkugeln auseinanderreißt und in den Zwischenräumen angesammelte Biomasse stoßartig entfernt. Das Spülwasser wird in einem Sammelbecken aufgefangen und nach Abtrennung der Biomasse in das Reservoir für einen neuen Spülvorgang zurückgeleitet. Um der Gefahr vorzubeugen, daß die Biomasse zwischen den einzelnen Spülphasen mit den Kunststoffkugeln verklebt und das Festbett verstopft, ist bei dem bekannten Verfahren weiterhin vorgesehen, daß dem Rohwasserstrom beim Durchlauf durch das schwimmende Festbett ein Teilstrom von bereits denitrifiziertem Wasser beigemengt wird. Durch die auf diese Weise erhöhte Strömungsgeschwindigkeit und Turbulenz im Reaktorbett sollen Verstopfungserscheinungen vermieden und die Spülabstände verlängert werden. Obwohl sich das bekannte Verfahren in der Praxis bewährt hat, wird jedoch noch als unbefriedigend angesehen, daß es in der untersten Schicht des Festbetts aufgrund der dort besonders hohen biologischen Aktivität zu einem Zusammenwachsen von Trägermaterial und Biomasse kommen kann und dadurch die Wirksamkeit des Spülvorgangs beeinträchtigt wird.

In der FR-A 2 446 259 sind ein Verfahren und apparative Einrichtungen zur biochemischen Aufbereitung von Wasser beschrieben, wobei als Trägermaterial für die Mikroorganismen Sand verwendet wird. Der Sand wird mit Hilfe einer aufwärts gerichteten Strömung in Schwebe gehalten und dadurch ein Schwebebett gebildet. Hierbei sind die Sandpartikel ständig in Bewegung und ihre Konzentration ist so gering, daß es nicht zu einem Zusammenbacken von Trägermaterial und Biomasse kommt. Zum Austrag überschüssiger Biomasse wird bei dem bekannten Verfahren mit Hilfe einer Wasserstrahlpumpe kontinuierlich mit Biomasse beladenes Trägermaterial aus dem Schwebebett abgesaugt und wieder in das Schwebebett zurückgeleitet, wobei Biomasse von den Sandkörnern abgetrennt wird, die dann aufgrund ihrer geringeren Dichte aufschwimmt und an der Oberfläche des Schwebebetts abgeführt wird.

Aufgabe der Erfindung ist es, die Spüleigenschaft des Verfahrens der eingangs genannten Art zu verbessern und eine intensivere, räumliche Ausnutzung des schwimmenden Festbetts durch die prozeßrelevanten Mikroorganismen zu erreichen.

Erfindungsgemäß wird diese Aufgabe dadurch gelöst, daß zusätzlich zu den Spülvorgang mittels einer Wasserstrahlpumpe mit Biomasse beladenes Trägermaterial aus einer oberen Zone des Festbetts entfernt und das in der Wasserstrahlpumpe gereinigte Trägermaterial zusammen mit der abgetrennten Biomasse auf die Rohwasserseite des Festbetts zurückgeführt wird.

Durch das erfindungsgemäße Verfahren wird das Trägermaterial des Betts kontinuierlich umgewälzt und dadurch in Bewegung gehalten. Gleichzeitig werden die Körner bei der Umwälzung von einem Teil der Biomasse getrennt, so daß ein Zusammenbacken größerer Einheiten wirksam vermieden wird. Die Schicht auf der Rohwasserseite des Betts erfährt durch das zurückgeführte Material eine ständige Umlagerung, so daß sie nicht mehr verwachsen oder zusammenwachsen kann. Die einzelnen Materialschichten wandern durch die Umwälzung in dem Bett, beispielsweise von unten nach oben und bewirken auf diese Weise eine gleichmäßigere Verteilung der aktiven Biomasse innerhalb des Betts, so daß das Volumen des Betts wesentlich besser ausgenutzt werden kann. Während bei einem ruhenden Festbett die Nährstoffkonzentration und damit die Aktivität der Biomasse in Durchflußrichtung abnimmt, läßt sich mit dem erfindungsgemäßen Verfahren eine weitgehend gleichmäßige Aktivität über die gesamte Fließstrecke des Betts erzielen. Das Abtrennen der Biomasse von der abgezogenen Trägermasse bewirkt schließlich eine Vorreinigung und Auflockerung des Betts, wodurch der Austrag der Biomasse bei der Spülung wesentlich verbessert wird. Die Spülvorgänge können daher verkürzt und die Spülabstände verlängert werden. Durch das Zurückführen der abgetrennten Biomasse auf die Rohwasserseite bleibt der Verfahrensablauf einfach und die Gefahr eines zu hohen Biomasseaustrags mit einer damit verbundenen Minderung der biologischen Aktivität wird vermieden. Die Verwendung einer Wasserstrahlpumpe hat den Vorteil, daß die Beanspruchung der Körner des Trägermaterials, beispielsweise in Form von Kugeln aus Schaumpolystyrol, gering ist, so daß sie nicht zerstört oder beschädigt werden.

Beim Verfahren der eingangs genannten Art, bei dem dem Rohwasserstrom ein Teilstrom des aufbereiteten Wassers beigemengt wird, wird zur Verwirklichung des erfindungsgemäßen Verfahrens weiterhin vorgeschlagen, den Teilstrom des aufbereiteten Wassers zum Antrieb der Strahlpumpe zu verwenden. Ist eine solche Teilstromrückführung nicht vorgesehen, so kann die Strahlpumpe vorteilhaft durch den Rohwasserstrom angetrieben werden. Eine höhere Umwälzrate an Trägermaterial läßt sich erfindungsgemäß erreichen, indem der Druckseite der Strahlpumpe der Rohwasserstrom und ein Teilstrom des aufbereiteten Wassers zugeführt werden.

Nach einem weiteren Vorschlag des erfindungsgemäßen Verfahrens kann das Abziehen, Reinigen und Zurückführen von Trägermaterial auch mit Hilfe einer anderen geeigneten Pumpe, beispielsweise einer Freistrompumpe, erfolgen. Entscheidend ist allein, daß das Trägermaterial die Pumpe ungehindert passieren kann und daß in der Pumpe eine ausreichende Verwirbelung und Scherbeanspruchung auftritt, um Trägermaterial und Biomasse voneinander zu trennen.

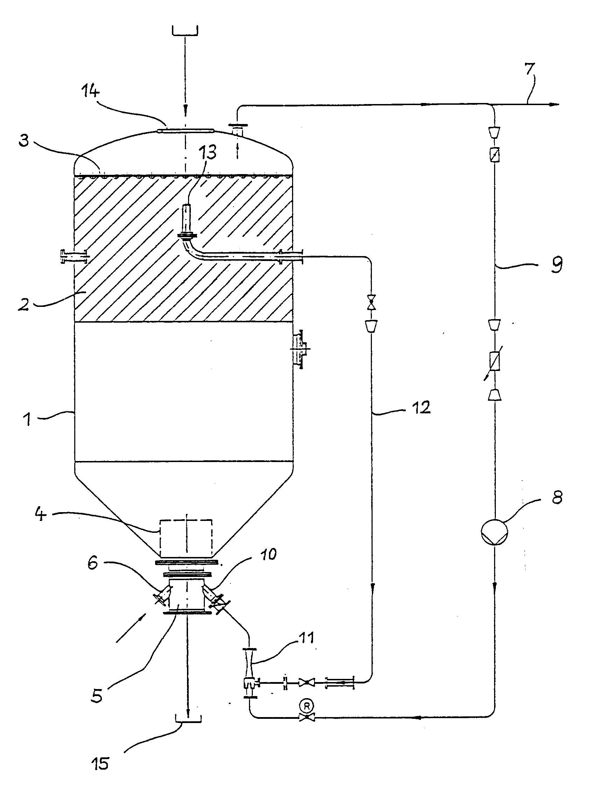

Die Erfindung wird nachfolgend anhand eines in der Zeichnung dargestellten Ausführungsbeispiels näher erläutert.

Die Zeichnung zeigt einen zylindrischen Reaktor 1 zur Denitrifikation von nitrathaltigem Wasser für eine Trinkwasserversorgungsanlage. In dem Reaktor 1 befindet sich ein ca. 2,5 m hohes, schwimmendes Festbett 2, bestehend aus mit Mikroorganismen behafteten Kunststoffkugeln, deren Dichte geringer ist als die des Wassers. Das Festbett 2 wird nach oben durch einen Düsenboden 3 begrenzt, der die Kunststoffkugeln zurückhält und eine gleichmäßige Verteilung des Wasserstroms bewirkt. An dem Spülwasserauslaufstutzen 5 befindet sich ein Anschlußstutzen 6, durch den das mit Nährstoffen versetzte Rohwasser kontinuierlich in den Reaktor 1 geleitet wird. Ein Verteiler 4 vor dem Spülwasserauslaufstutzen 5 sorgt für eine gleichmäßige Verteilung des Rohwasserstroms über den Strömungsquerschnitt des Reaktors 1. Das Rohwasser durchströmt in aufsteigender Richtung das Festbett 2, wobei es von Nitrat befreit wird, und wird über den Düsenboden 3 als Klarwasser über eine Leitung 7 aus dem System abgeleitet. Ein Teilstrom des Klarwassers wird von einer Rezirkulationspumpe 8 über eine Leitung 9 in den Reaktor 1 zurückgeführt. Die Leitung 9 ist über einen Anschlußstutzen 10 ebenfalls an den Spülwasserauslaufstutzen 5 angeschlossen. Zwischen der Rezirkulationspumpe 8 und dem Anschlußstutzen 10 ist in der Leitung 9 eine Strahlpumpe 11 angeordnet, deren Treibdüse mit der Druckseite der Rezirkulationspumpe 8 und deren Diffusor mit dem Anschlußstutzen 10 verbunden ist. Von der Saugseite der Strahlpumpe 11 führt eine Leitung 12 in den Reaktor 1, wo sie mit einem Saugstutzen 13 im oberen Teil etwa in der Mitte des Festbetts 2 endet. Auf diese Weise wird von der Strahlpumpe 11 kontinuierlich Festbettmaterial mit der daran haftenden Biomasse durch die Rohrleitung 12 abgesaugt und nach Durchströmen der Strahlpumpe 11 zusammen mit dem zurückgeführten Klarwasser auf der Rohwasserseite dem Reaktor 1 wieder zugeführt. Hierbei wird beim Durchströmen der Rohrleitung 12 und vor allem innerhalb der Strahlpumpe 11 an dem Festbettmaterial haftende Biomasse abgetrennt. Nach dem erneuten Eintritt in den Reaktor 1 lagern sich die mehr oder weniger stark von Biomasse gereinigten Kunststoffkugeln aufgrund ihrer geringen Dichte rasch an der Unterseite des Festbetts wieder an, während die abgetrennten Biomassepartikel vom Festbettmaterial festgehalten werden, wobei keine starken Bindungen zwischen ihnen und dem Festbettmaterial auftreten.

Beim Spülvorgang wird durch eine Öffnung 14 im Deckelboden des Reaktors 1 aus einem nicht dargestellten Reservoir eine Spülwassermenge stoßartig auf das schwimmende Festbett 2 geleitet, wobei das Trägermaterial durcheinandergewirbelt und ein Teil der Biomasse gelöst und ausgetragen wird. Auch die bereits abgetrennte und sedimentierte Biomasse wird bei diesem Vorgang aus dem Reaktor entfernt. Über den Spülwasserauslaufstutzen 5 gelangt das Spülwasser in ein Auffangbecken 15, von wo es nach Abtrennung der Biomasse in den Aufbereitungsprozeß eingespeist werden kann.

## Patentansprüche

1. Verfahren zur biochemischen Aufbereitung von Wasser, insbesondere zur Denitrifikation von nitrathaltigem Wasser, bei dem das Rohwasser über ein Festbett (2) aus einem schwimmfähigen, körnigen Trägermaterial geleitet wird, das den Mikroorganismen als Träger bzw. Bewuchsfläche dient, und bei dem in Abständen ein Spülvorgang zum Entfernen von Biomasse aus dem Festbett (2) durchgeführt wird, dadurch gekennzeichnet, daß zusätzlich zu dem Spülvorgang mittels einer Wasserstrahlpumpe (11) mit Biomasse beladenes Trägermaterial aus einer oberen Zone des Festbetts (2) entfernt und das in der Wasserstrahlpumpe (11) gereinigte Trägermaterial zusammen mit der Biomasse auf die Rohwasserseite des Festbetts (2) zurückgeführt wird.

2. Verfahren nach Anspruch 1, wobei dem Rohwasserstrom ein Teilstrom des aufbereiteten Wassers beigemengt wird, dadurch gekennzeichnet, daß die Strahlpumpe (11) durch den Teilstrom (9) des aufbereiteten Wassers angetrieben wird.

3. Verfahren nach Anspruch 1, dadurch gekennzeichnet, daß die Strahlpumpe (11) durch den Rohwasserstrom angetrieben wird.

4. Verfahren nach den Ansprüchen 2 und 3, dadurch gekennzeichnet, daß die Strahlpumpe (11) durch den Rohwasserstrom und einen Teilstrom des aufbereiteten Wassers angetrieben wird.

5. Verfahren nach einem der Ansprüche 1 bis 4, dadurch gekennzeichnet, daß das Entfernen, Reinigen und Zurückführen des Trägermaterials mit Hilfe einer Freistrompumpe erfolgt.

## Claims

1. A method for the biochemical treatment of water, especially for the denitrification of nitrate-containing water, wherein the untreated water is passed over a fixed bed (2) of a floatable, granular carrier material which serves as a carrier or growth surface for the microorganisms and wherein a washing procedure is performed at intervals to remove biomass from the fixed bed (2), characterised in that, in addition to the washing process, carrier material bearing biomass from an upper zone of the fixed bed (2) is removed by means of a water jet pump (11) and that carrier material purified through the water jet pump (11) is returned together with the biomass to the untreated water side of the fixed bed (2).

2. A method according to claim 1 wherein a partial stream of treated water is mixed in with the untreated water stream, characterised in that the jet pump (11) is driven by the partial stream (9) of treated water.

3. A method according to claim 1, characterised in that the jet pump (11) is driven by the untreated water stream.

4. A method according to claims 2 and 3, characterised in that the jet pump (11) is driven by the untreated water stream and a partial stream of treated water.

5. A method according to any one of claims 1 to 4, characterised in that the removal, purification and return of the carrier material is carried out with the aid of a non-clogging pump.

## Revendications

1. Procédé pour le traitement biochimique de l'eau, notamment pour la dénitrification d'eau contenant du nitrate, selon lequel on fait passer l'eau brute par un lit fixe (2) formé d'un matériau granuleux flottable qui sert de substrat ou de surface de salissure pour les micro-organismes, et on procède à intervalles réguliers à un rinçage pour éliminer la biomasse du lit fixe (2), caractérisé en ce que, en plus du rinçage, on enlève du matériau de substrat chargé de biomasse d'une zone supérieure du lit fixe (2) à l'aide d'un éjecteur à eau (11), et on ramène le matériau de substrat purifié dans l'éjecteur à eau (11), avec la biomasse, du côté de l'eau brute du lit fixe (2).

2. Procédé selon la revendication 1, selon lequel un courant partiel de l'eau traitée est mélangé au courant d'eau brute, caractérisé en ce que l'éjecteur (11) est entraîné par le courant partiel (9) de l'eau traitée.

3. Procédé selon la revendication 1, caractérisé en ce que l'éjecteur (11) est entraîné par le courant d'eau brute.

4. Procédé selon les revendications 2 et 3, caractérisé en ce que l'éjecteur (11) est entraîné par le courant d'eau brute et un courant partiel de l'eau traitée.

5. Procédé selon l'une des revendications 1 à 4, caractérisé en ce que l'élimination, la purification et le retour du matériau de substrat se font à l'aide d'une pompe non engorgeable.
